# EUROPÄISCHE PATENTSCHRIFT

(11) **EP 1 791 736 B1**
(45) Veröffentlichungstag und Bekanntmachung des Hinweises auf die Patenterteilung: **30.07.2014**
(21) Anmeldenummer: 05785199.0
(22) Anmeldetag: 13.09.2005
(51) Int. Cl.: B60T 1/00, B60T 7/12

(54) **FESTSTELLBREMSVORRICHTUNG**
PARKING BRAKE
DISPOSITIF DE FREIN DE STATIONNEMENT

(30) Priorität: 16.09.2004 DE 102004044940
(43) Veröffentlichungstag der Anmeldung: 06.06.2007
(73) Patentinhaber: KNORR-BREMSE Systeme für Nutzfahrzeuge GmbH, 80809 München (DE)
(72) Erfinder: KIENER, Wolfgang, 10247 Berlin (DE); LANGE, Stephan, 13465 Berlin (DE); BAUMGARTNER, Johann, 85368 Moosburg (DE); GERUM, Eduard, 83026 Rosenheim (DE); HERGES, Michael, 70825 Korntal-Münchingen (DE); GANZHORN, Dirk, 81543 München (DE); CSÀK, Bence, H-1124 Budapest (HU); SAVAGNER, Nicolas, F-14100 Le Mesnil Eudes (FR); NEUMANN, Uwe, 96050 Bamberg (DE); GRADL, Matthias, 96145 Sesslach (DE); SCHÄFER, Matthias, 96450 Coburg (DE)
(74) Vertreter: Mattusch, Gundula
(86) Internationale Anmeldenummer: PCT/EP2005/009829
(87) Internationale Veröffentlichungsnummer: WO 2006/029815

(56) Entgegenhaltungen:
- EP-A- 0 518 008
- WO-A-03/085280
- AU-A- 3 809 478
- US-A- 4 934 490
- US-B1- 6 250 433
- US-B1- 6 536 571

## Beschreibung

Die Erfindung betrifft eine Feststellbremsvorrichtung für ein Fahrzeug, insbesondere ein Nutzfahrzeug, mit mehreren Rädern und zugehörigen Radnaben.

Nutzfahrzeuge, deren zulässiges Gesamtgewicht im oberen Bereich liegt, sind zumeist mit einer mittels Druckluft betätigbaren Betriebsbremse ausgestattet. Derartige Nutzfahrzeuge werden in der Regele entweder als sogenannte Aufleger und/oder im Anhängerbetrieb eingesetzt.

Die druckluftbetätigbare Betriebsbremse besteht aus den einzelnen Rädern zugeordneten Bremseinrichtungen, die jedenfalls zum Teil mit einem Federspeicherkombibremszylinder ausgerüstet werden. Zum Sichern des abgestellten Fahrzeuges wirkt die Feder des Federspeicherabschnittes des Bremszylinders auf das Bremselement, beispielsweise auf die Bremsscheiben oder auf die Bremsbacken. Darüber hinaus ist bei einer solchen Anordnung sichergestellt, dass jede Bremseinrichtung in die Bremsstellung gebracht wird, sofern ein Defekt in der Druckluftversorgung auftritt. Die Haltekraft jeder Bremseinrichtung im abgestellten Zustand des Nutzfahrzeuges wird demzufolge mechanisch erzeugt.

Damit der Federspeicherzylinder während einer Fahrt oder bei verkehrsmäßig bedingten Unterbrechungen der Fahrt wirkungslos wird, wird dieser durch einen druckluftbeaufschlagbaren Kolben soweit vorgespannt, dass keine Kraft von der Feder des Federspeicherbremszylinders auf das Betätigungsorgan der Bremseinrichtung wirkt, so dass das Fahrzeugrad zum freien Lauf freigegeben ist.

Derartige Bremsen mit Federspeicher-Kombizylindern haben sich seit langem bestens bewährt. Der Vorteil einer solchen Lösung besteht unter anderem darin, dass die vorhandene Betriebsbremse auch als Parkbremse genutzt wird und diese Betriebsbremse sehr robust und zuverlässig ausgeführt werden kann.

Weniger vorteilhaft sind allerdings der sehr große Bauraumbedarf und das hohe Gewicht des Federspeicherkombizylinders. Darüber hinaus muss im fahrbereiten Zustande des Nutzfahrzeuges jeder Federspeicherbremszylinder ständig mit Druckluft beaufschlagt werden, so dass der Verbrauch entsprechend hoch ist. Außerdem muss für den Federspeicherbremszylinder ein eigener Druckluftversorgungskreis aufgebaut werden.

Aus vorstehend genannten Gründen sind auch schon andere Lösungen für eine Feststellbremsvorrichtung vorgeschlagen worden. So sind selbstverstärkende Systeme bekannt, bei denen über Klemmeffekte oder einen Formschluss die Bremsung bewirkt wird. Die benötigte Energie zur Betätigung dieser Systeme ist gegenüber den Federspeicherbremszylindern erheblich reduziert. Bei derartigen Systemen treten jedoch auch Nachteile auf. Bei formschlüssigen Systemen kann die Parkposition nicht stufenlos gefunden werden, das heißt, das zu sichernde Fahrzeug muss noch, wenn auch ein geringes Stück, rollen, bevor die Formschlussposition gefunden wird. Darüber hinaus ist nachteilig, dass derartige Systeme äußerst empfindlich gegen das Einlegen der den Formschluss bewirkenden Bauteile sind, da bei der Findung des Formschlusses bei noch rollendem Nutzfahrzeug die Energie des rollenden Nutzfahrzeuges von den Bauteilen aufgenommen werden muss, was häufig zu einer Zerstörung führt. Aus diesen Gründen sind derartige Systeme bislang in der Praxis nicht eingeführt worden.

Es sind außerdem noch separat anzuordnende Feststellbremsvorrichtungen bekannt, die Selbstverstärkungseffekte nutzen. Diese Anordnungen haben den grundsätzlichen Nachteil, dass neben der Betriebsbremse eine zweite Bremseinrichtung geschaffen werden muss, die zusätzlichen Bauraum beansprucht.

Vor diesem Hintergrund ist es die Aufgabe der Erfindung, eine Feststellbremsvorrichtung zu schaffen, die einen geringen Bauraumbedarf aufweist und vorzugsweise auch einen geringen Bedarf an Betätigungsenergie hat.

Die gestellte Aufgabe wird durch wenigstens ein vorzugsweise in wenigstens eine oder mehrere der Radnaben integriertes oder im Bereich der Radnaben angeordnetes Freilaufgesperre gelöst. US 4 934 490 A beschreibt eine konventionelles Freilaufgesperre.

Dieses lässt sich kompakt an der Radnabe anordnen und derart bauraum- und kostengünstig realisieren.

Vorzugsweise weist das Freilaufgesperre einen Innen- und einen Außenring an der Radnabe auf, deren einander zugewandt liegende Flächen als unter Bildung eines Ringspaltes als gegensinnige Konusflächen ausgebildet sind, wobei zwischen diesen Flächen mehrere als Kegelrollen gestaltete Bremskörper angeordnet sind, die mittels zugeordneten Stellgliedern in eine Freigabestellung und in eine Bremsstellung verfahrbar sind.

Die Hauptfunktionsteile dieser Feststellbremsvorrichtung für ein Fahrzeugrad sind nunmehr der Innen- und der Außenring sowie mehrere Kegelrollen.

Derartige Bauteile lassen sich nicht nur einfach herstellen, sie können auch äußerst kompakt als Baueinheit ausgebildet sein, so dass trotz einer sinngemäß separat von der Betriebsbremse arbeitenden Feststellbremsvorrichtung nur ein äußerst geringer Bauraum benötigt wird.

Um die Kegelrollen in die Freigabestellung zu bringen, ist nur ein äußerst geringer Weg notwendig, da die Außenmantelflächen der Kegelrollen selbst bei einem geringen Weg außer Kontakt mit den konischen Flächen des Innen- und Außenringes kommen. Außerdem sind die Lösekräfte äußerst gering.

In bevorzugter Ausführung werden die Stellglieder ebenfalls pneumatisch betätigt, wobei jedoch die benötigte Energie wesentlich geringer ist als bei einer Betriebsbremse mit einem Federspeicherzylinder. Darüber hinaus ist ebenfalls sichergestellt, dass bei Ausfall der Druckluftversorgung die Feststellbremsvorrichtung selbsttätig aktiviert wird. Die Stellglieder könnten auch eine Verschiebung des Innen- und des Außenringes in der Form bewirken, dass die Bremskörper in die Freigabestellung bzw. in die Bremsstellung gebracht werden können. In einer konstruktiv bevorzugten Ausführung ist jedoch vorgesehen, dass die Kegelrollen in ihrer Längsrichtung verfahrbar sind, und dass der Innen- und der Außenring gegen axiale Verschiebungen gesichert sind. In weiterer Ausgestaltung ist vorgesehen, dass jede Kegelrolle durch mindestens eine Druckfeder in die Bremsstellung bringbar ist. Das Überführen der Kegelrollen in die Freigebestellung wird dann entgegen der Wirkung der Druckfedern erreicht.

Dazu sind die Stellglieder als pneumatisch arbeitende Stellglieder ausgebildet, das heißt, sie werden während des normalen Fahrzustandes stirnseitig mit Druckluft beaufschlagt.

Es ist ferner noch vorzugsweise vorgesehen, dass die Feststellbremsvorrichtung für jedes Rad in seiner Nabe installiert ist. Aufgrund der Konizität des Innen- und des Außenringes sowie der Kegelrollen wird zwar schon eine ausreichende Bremswirkung erzielt, es ist jedoch noch in weiterer Ausgestaltung vorgesehen, dass der Innen- und/oder der Außenring mit Klemmrampen versehen sind, so dass die Wirkung noch erhöht wird. Die Klemmrampen sind vorzugsweise der konischen Innenfläche des Außenringes zugeordnet und sie bilden sinngemäß eine Verengung des Ringspaltes in definierten Bereichen. Dabei können die Klemmrampen so ausgelegt sein, dass sie ein- oder beidseitig wirken. Es wird dann ein Blockieren bzw. Verkeilen in beiden Drehrichtungen des Rades erreicht.

Es ist allgemein bekannt, dass die Bremswirkung durch den Innen- und den Außenring in Verbindung mit den Kegelrollen umgekehrt proportional zum Kegelwinkel ist, das heißt, je kleiner der Kegelwinkel ist, desto größer ist der Kraftbedarf, um die Feststellbremsvorrichtung in die Freigabestellung zu bringen. Es ist deshalb der Kegelwinkel so zu wählen, dass einerseits eine sichere Bremswirkung erzielt wird, wenn das Nutzfahrzeug abgestellt wird, dass jedoch auch andererseits die zum Überführen in die Freigabestellung benötigte Kraft in Grenzen gehalten wird.
Die zum Überführen der Feststellbremsvorrichtung notwendige Kraft in die Freigabestellung geht gegen Null, wenn der Wert des Tangens als Winkelfunktion des Kegelwinkels gleich dem Reibwert zwischen den Kegelrollen und den Flächen des Innen- und Außenringes wird. Es ist dann jedoch keine ausreichende Bremswirkung mehr gegeben. Es ist deshalb vorgesehen, dass der Kegelwinkel unter Berücksichtigung der möglichen Streuungen des Reibbeiwertes um einen definierten Betrag kleiner ist als der sich aus dem Tangens ergebende Grenzwinkel. Dadurch ist sichergestellt, dass auch bei geringstmöglichen Reibwerten noch eine ausreichende Bremsung erzielt wird. Es muss jedoch dann für die Ermittlung der notwendigen Kräfte zum Überführen der Feststellbremsvorrichtung in die Freigabestellung diejenige Klemmkraft ermittelt werden, die mit dem größtmöglichen Reibwert erzielt wird.

Aus den vorstehenden Ausführungen ergibt sich, dass zur Erzielung einer sicheren Bremswirkung bei gleichzeitig möglichst niedriger Kraft zum Überführen in die Freigabestellung die Reibbeiwerte an den Rollkörpern der Anordnung in engen Grenzen gehalten werden müssen. Es ist deshalb vorgesehen, dass die Feststellbremsvorrichtung in einem im wesentlichen geschlossenen Gehäuse angeordnet ist, da man dann von einem hermetischen Schutz ausgehen kann. Es ist deshalb auch noch vorgesehen, dass die Feststellbremsvorrichtung mit dem zugehörigen Radlager des jeweiligen Rades eine Baueinheit bildet, die in dem im wesentlichen geschlossenen Gehäuse angeordnet ist.

Anhand der beiliegenden Zeichnungen wird die Erfindung noch näher erläutert. Es zeigen:
- Figur 1: eine in den Ringspalt zwischen einem Außen- und einem Innenring eingesetzte Kegelrolle in der Bremsstellung,
- Figur 2: die Anordnung nach der Figur 1 in der Freigabestellung, und
- Figur 3: eine Teilstirnansicht der erfindungsgemäßen Feststellbremsvorrichtung, stark schematisiert.

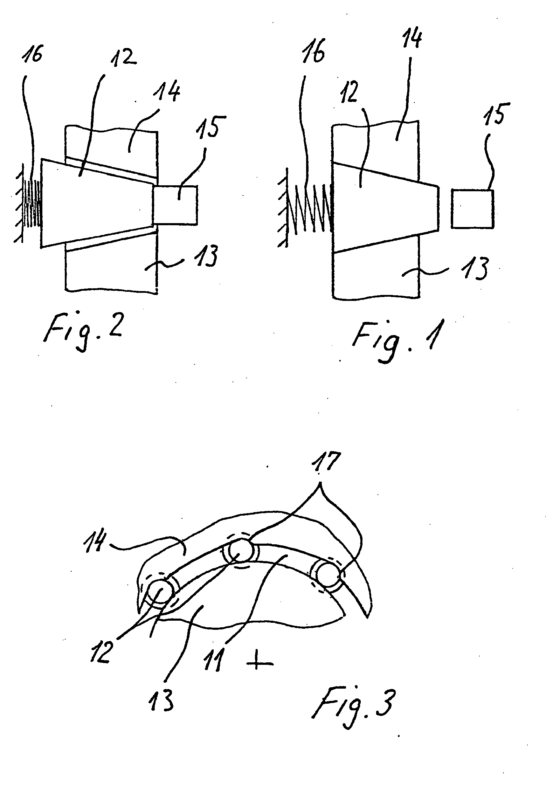

Die erfindungsgemäße Feststellbremsvorrichtung 10 enthält im wesentlichen mehrere im gleichen Winkelabstand zueinander in einem Ringspalt 11 angeordnete Kegelrollen, einen Innenring 13 und einen Außenring 14. Die einander zugewandten Flächen des Innenringes 13 und des Außenringes 14 sind entsprechend dem Kegelwinkel jeder Kegelrolle 12 konisch ausgebildet. Die Feststellbremsvorrichtung 10 ist außerdem mit einem pneumatisch arbeitenden Stellglied 15 ausgestattet welches auf die kleinere Stirnfläche jeder Kegelrolle 12 wirkt. Dadurch werden die Kegelrollen 12 von der in der Figur 1 dargestellten Bremsstellung in die in der Figur 2 dargestellte Lösestellung verfahren. Dies erfolgt entgegen der Wirkung einer Druckfeder 16, die auf die größere Fläche der jeweiligen Kegelrolle 12 wirkt. Es ist ergibt sich aus den Figuren 1 und 2, dass bei Abfall des auf die Stellglieder 15 wirkenden Druckes die Kegelrollen 12 durch die Wirkungen der Druckfeder 16 in die Bremsstellungen verfahren werden.

Um die Bremswirkungen der Kegelrollen 12 noch zu erhöhen, ist bei der Ausführung der Figur 3 vorgesehen, dass einseitig angrenzend an jede Kegelrolle 12 eine Klemmrampe 17 an der Konusfläche des Außenringes 14 vorgesehen ist. Es ergibt sich aus der Figur 3, dass der Innenring 13 entgegen dem Uhrzeigersinn gedreht werden kann, während bei einer Drehung in der entgegengesetzten Richtung die Klemmrampen 17 wirksam werden, so dass ein Verkeilen der Kegelrollen 12 erfolgt. Die Kombination aus dem Innenring 13, dem Außenring 14 und den Kegelrollen 12 könnte auch als Freilaufgesperre bezeichnet werden.

Die Erfindung ist nicht auf die dargestellten Ausführungsbeispiele beschränkt. Wesentlich ist, dass in der Radnabe eines Fahrzeugrades eine Feststellbremsvorrichtung 10 installiert ist, welches eigene Bremselemente 12, 13, 14 aufweist, die nicht Teil der pneumatisch arbeitenden Betriebbremse sind, jedoch bei Inbetriebnahme eines Fahrzeuges in eine Freigabestellung gebracht werden.

### Bezugszeichen

- 10: Feststellbremsvorrichtung
- 11: Ringspalt
- 12: Kegelrolle
- 13: Innenring
- 14: Außenring
- 15: Stellglied
- 16: Druckfeder
- 17: Klemmrampe

## Patentansprüche

1. Selbsttätig aktivierbare Feststellbremsvorrichtung (10) für ein Nutzfahrzeug mit mehreren Rädern und zugehörigen Radnaben, **gekennzeichnet durch** wenigstens ein vorzugsweise in wenigstens eine oder mehrere der Radnaben integriertes oder im Bereich der Radnaben angeordnetes Freilaufgesperre, welches einen Innen- und einen Außenring (13, 14) an der Radnabe aufweist, deren einander zugewandt liegende Flächen unter Bildung eines Ringspaltes (11) als gegensinnige Konusflächen ausgebildet sind.

2. Selbsttätig aktivierbare Feststellbremsvorrichtung (10) nach Anspruch 1, **dadurch gekennzeichnet, dass** zwischen den Flächen des Innen- und des Außenringes als Kegelrollen (12) gestaltete Bremskörper angeordnet sind, die mittels zugeordneten Stellgliedern (15) in eine Freigabestellung und in eine Bremsstellung verfahrbar sind.

3. Feststellbremsvorrichtung nach Anspruch 1 oder 2, **dadurch gekennzeichnet, dass** die Kegelrollen (12) in ihrer Längsrichtung verfahrbar sind, und dass der Innen- und der Außenring (13, 14) gegen axiale Verschiebung gesichert sind.

4. Feststellbremsvorrichtung nach Anspruch 3, **dadurch gekennzeichnet, dass** jede Kegelrolle (12) durch mindestens eine Druckfeder (16) in die Bremsstellung verfahrbar ist.

5. Feststellbremsvorrichtung nach einem der vorstehenden Ansprüche, **dadurch gekennzeichnet, dass** jedes Stellglied (15) als pneumatisch arbeitendes Stellglied ausgebildet ist.

6. Feststellbremsvorrichtung nach einem oder mehreren der vorhergehenden Ansprüche 1 bis 4, **dadurch gekennzeichnet, dass** der Innenring (13) und/oder der Außenring (14), vorzugsweise der Außenring (14) Klemmrampen (17) aufweist für die Kegelrollen (12) aufweist.

7. Feststellbremsvorrichtung nach Anspruch 6, **dadurch gekennzeichnet, dass** die Klemmrampen (17) ein- oder beidseitig wirkend ausgebildet sind.

8. Feststellbremsvorrichtung nach einem oder mehreren der vorhergehenden Ansprüche 1 bis 7, **dadurch gekennzeichnet, dass** der Kegelwinkel jeder Kegelrolle (12) um einen definierten Betrag kleiner ist als der sich aus dem Wert des Tangens ergebende Grenzwinkel unter Berücksichtigung der Reibwinkel zwischen den Kegelrollen (12) und den konischen Flächen des Innenringes (13) und des Außenringes (14).

9. Feststellbremsvorrichtung nach einem oder mehreren der vorhergehenden Ansprüche 1 bis 8, **dadurch gekennzeichnet, dass** jede Feststellbremsvorrichtung (10) in einem im wesentlichen geschlossenen Gehäuse angeordnet ist.

10. Feststellbremsvorrichtung nach Anspruch 9, **dadurch gekennzeichnet, dass** die Feststellbremsvorrichtung (10) mit dem Radlager des jeweiligen Rades eine Baueinheit bildet.

## Claims

1. Automatically actuated parking brake device (10) for a commercial vehicle having a plurality of wheels and associated wheel hubs, **characterised by** at least one freewheel lock which is preferably integrated into at least one or more of the wheel hubs or arranged in the region of the wheel hubs and which has an inner and an outer ring (13, 14) on the wheel hub, whose faces which are situated so as to face toward one another are formed as opposing cone faces so as to form an annular gap (11).

2. Automatically actuated parking brake device (10) according to claim 1, **characterised in that** a plurality of brake bodies which are designed as taper rollers (12) are arranged between said faces, which taper rollers (12) can be moved by means of associated actuating members (15) into a release position and into a braking position.

3. Parking brake device according to claim 1 or 2, **characterised in that** the taper rollers (12) can be moved in their longitudinal direction, and **in that** the inner and the outer ring (13, 14) are prevented from being displaced axially.

4. Parking brake device according to claim 3, **characterised in that** each taper roller (12) can be moved into the braking position by means of at least one compression spring (16).

5. Parking brake device according to any of the preceding claims, **characterised in that** each actuating member (15) is embodied as a pneumatically operating actuating member.

6. Parking brake device according to one or more of the preceding claims 1 to 4, **characterised in that** the inner ring (13) and/or the outer ring (14), preferably the outer ring (14), has/have clamping ramps (17) for the taper rollers (12).

7. Parking brake device according to claim 6, **characterised in that** the clamping ramps (17) are designed so as to be single- or double-acting.

8. Parking brake device according to one or more of the preceding claims 1 to 7, **characterised in that** the cone angle of each taper roller (12) is smaller by a defined magnitude than the limit angle arising from the value of the tangent, taking into consideration the friction angles between the taper rollers (12) and the conical faces of the inner ring (13) and of the outer ring (14).

9. Parking brake device according to one or more of the preceding claims 1 to 8, **characterised in that** each parking brake device (10) is arranged in a substantially closed housing.

10. Parking brake device according to claim 9, **characterised in that** the parking brake device (10) forms a structural unit together with the wheel bearing of the respective wheel.

## Revendications

1. Dispositif (10) de frein de stationnement pouvant être actionné automatiquement pour un véhicule utilitaire ayant plusieurs roues et moyeux de roue associés, **caractérisé par** au moins un encliquetage à roue libre intégré dans au moins un ou plusieurs des moyeux de roue ou disposé dans la zone des moyeux de roue, qui a une bague (13) intérieure et une bague (14) extérieure sur le moyeu de roue, dont les surfaces tournées l'une vers l'autre sont constituées avec formation d'un intervalle (11) annulaire sous la forme de surfaces de cône en sens inverse.

2. Dispositif (10) de frein de stationnement pouvant être actionné automatiquement suivant la revendication 1, **caractérisé en ce que**, entre les surfaces de la bague intérieure et de la bague extérieure, sont disposées des pièces de frein, qui sont conformées en rouleaux (12) coniques et qui peuvent être mises, au moyen d'éléments (15) de réglage associés, dans une position de libération et dans une position de frein.

3. Dispositif (10) de frein de stationnement pouvant être actionné automatiquement suivant la revendication 1 ou 2, **caractérisé en ce que** les rouleaux (12) coniques peuvent être déplacés dans leur direction longitudinale et **en ce que** la bague (13) intérieure et la bague (14) extérieure sont empêchées de se déplacer axialement.

4. Dispositif (10) de frein de stationnement pouvant être actionné automatiquement suivant la revendication 3, **caractérisé en ce que** chaque rouleau (12) conique peut être mis dans la position de frein par au moins un ressort (16) de compression.

5. Dispositif (10) de frein de stationnement pouvant être actionné automatiquement suivant l'une des revendications précédentes, **caractérisé en ce que** chaque élément (15) de réglage est constitué sous la forme d'un élément de réglage travaillant de manière pneumatique.

6. Dispositif (10) de frein de stationnement pouvant être actionné automatiquement suivant l'une ou plusieurs des revendications précédentes 1 à 4, **caractérisé en ce que** la bague (13) intérieure et/ou la bague (14) extérieure, de préférence la bague (14) extérieure, a des rampes (17) de serrage des rouleaux (12) coniques.

7. Dispositif (10) de frein de stationnement pouvant être actionné automatiquement suivant la revendication 6, **caractérisé en ce que** les rampes (17) de serrage sont constituées de manière à agir d'un côté ou des deux côtés.

8. Dispositif (10) de frein de stationnement pouvant être actionné automatiquement suivant l'une ou plusieurs des revendications précédentes 1 à 7, **caractérisé en ce que** l'angle de cône de chaque rouleau (12) conique est plus petit d'un montant défini que l'angle limite donné par la valeur de la tangente, en tenant compte de l'angle de frottement entre le rouleau (12) conique et les surfaces coniques de la bague (13) intérieure et de la bague (14) extérieure.

9. Dispositif (10) de frein de stationnement pouvant être actionné automatiquement suivant l'une ou plusieurs des revendications précédentes 1 à 8, **caractérisé en ce que** chaque dispositif (10) de frein de stationnement est disposé dans une enveloppe sensiblement fermée.

10. Dispositif (10) de frein de stationnement pouvant être actionné automatiquement suivant la revendication 9, **caractérisé en ce que** le dispositif (10) de frein de stationnement forme une unité de construction avec le palier de la roue respective.
